(19) Europäisches Patentamt
European Patent Office
Office européen des brevets

(11) **EP 3 483 827 A1**

(12) **EUROPEAN PATENT APPLICATION**

(43) Date of publication:
**15.05.2019 Bulletin 2019/20**

(51) Int Cl.:
*G06Q 30/06* (2012.01)  *G06Q 20/18* (2012.01)
*G06Q 20/32* (2012.01)  *G07F 9/02* (2006.01)
*G07F 13/06* (2006.01)

(21) Application number: **17382753.6**

(22) Date of filing: **08.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **BSH Hausgeräte GmbH**
 **81739 München (DE)**

• **BSH Electrodomésticos España, S.A.**
 **50016 Zaragoza (ES)**

(72) Inventors:
• **JEDLINSKI, Jakub Jan**
 **85579 Neubiberg (DE)**
• **LASALA ALONSO, Hugo**
 **5006 Zaragoza (ES)**
• **SCHUSTER, Lucia**
 **70173 Stuttgart (DE)**
• **SUÁREZ IRIBARNE, Álvaro**
 **08002 Barcelona (ES)**

(54) **PROVIDING BLENDED CONSUMER GOODS**

(57)    A method for providing blended consumer goods to a user by using a blending device (BD) that is adapted to store at least two starting goods blendable into a blended consumer good comprises: recording (REC) selection data concerning selections of the blended consumer goods by the user; recording response data provided by the user concerning responses to the selected blended consumer goods; and processing (COD1 - COD5, PP, DA) the data to prioritize presentation (SP, AUI) of blended consumer goods on a user interface (BD, UCD) for selection by the user. A data processing device (DPD, BD, UCD) comprises a data processing unit and a data storage (DB) for storing the recorded data and/or the processed data, wherein the data processing device is adapted to perform the method. A system comprises the data processing device and at least one blending device. The invention is particularly useful for blending fragrances, food, or beverages.

Fig.1

**EP 3 483 827 A1**

**Description**

The invention relates to a method for providing blended consumer goods to a user by using a blending device that is adapted to store at least two starting goods blendable into a blended consumer good. The invention also relates to a data processing device comprising a data processing unit and a data storage for storing the selection data, the response data and/or the processed data, wherein the data processing device is adapted to perform the method. The invention further relates to a system, comprising the data processing device and at least one blending device adapted to dispense the blended consumer goods based on selections of ingredients and / or pre-mixed ingredient mixes made by the user. The invention is particularly useful for blending fragrances, food, or beverages.

There is an increasing demand for creating individualized recipes for fragrances, food or beverages etc. for special occasions, needs and/or for different moods. In this context a fragrance, food or beverages blending device / blender machine may be provided which enables a user to create an individual fragrance, food or beverage based on a set of user-selected ingredients.

US 6,759,072 discloses a system for making and delivering a customized beverage product to a consumer having a user interface, a customization director in communication with a customization data store and the user interface, wherein the customization director includes executable instructions for determining a user's customized formulation; and a beverage delivery system in communication with the customization director, wherein the beverage delivery system includes executable instructions for delivering a customized beverage product. This document further discloses a method for delivering a customized beverage product to an individual including the steps of obtaining consumer preference data; determining a consumer beverage formulation corresponding to the consumer preference data; and providing the consumer a customized beverage corresponding to the customized beverage formulation, utilizing one or more of delayed dilution, delayed mixing, and delayed filtering, in any order.

US 8,442,674 discloses methods and apparatus describing a convenience beverage vending machine and its operation are described. An embedded computer interface allows consumers to create their own drinks or choose from a menu of drinks. Drinks are dispensed in a re-usable container. The beverages may be made from hot water, cold water or carbonated water that is mixed with various flavours of syrup, sweeteners and nutritional supplements. Identification may be presented and the computer recognizes the consumer and pulls up that consumer's account to determine funds available and previous drink selections and mixtures. The machine may incorporate an automatic cleaning cycle for both the valves and the dispense area.

US 9,499,385 discloses a system and method for brewing and dispensing beverages may use customer profiling to select beverages to be produced and presented to a given customer and/or messages to be displayed to the customer, based on customer-specific information stored on a loyalty card, in a local system, or remotely. A user interface mechanism may receive input identifying the given customer. A controller may select a base drink recipe dependent on the customer's identity, and may initiate production of a beverage using the selected drink recipe. Each drink recipe may specify an amount of water, coffee, flavourings, dairy, and/or other ingredients, and may be further customizable to add or remove ingredients and/or to change an amount thereof, based on received user input. The stored customer-specific information may include a customer identifier, account information, a purchase history, a message history, drink recipes, and/or an email address for each of a plurality of customers.

US 9,155,330 discloses a vending machine for producing beverages. The vending machine presents a user with a number of beverage options and receives the user selection. A plurality of refrigerated containers house various comestibles. An ejection mechanism is disposed within each container for expelling comestibles from the container. Control module selectively actuates the ejection mechanisms to expel comestibles required to make the user-selected beverage. The expelled comestibles slide down along a ramp into a blender pitcher. A liquid is dispensed onto the ramp facilitating movement of the comestibles. The control module actuates the blender apparatus to blend the comestibles and the liquid into a homogenous beverage. The beverage is dispensed into a cup. The ramp and the blender pitcher are automatically rinsed after preparation of each beverage.

WO 2016/107163 A1 discloses an intelligent control system of a personal nursing care cosmetic instrument and method thereof, the method comprising the following steps: an application software of an intelligent terminal establishes a wireless connection with a nursing care cosmetic instrument; operation settings of the nursing care cosmetic instrument are operated via an intuitive operation interface of the app software of the intelligent terminal; the nursing care cosmetic instrument feeds back current usage information of a user and sends the same to the app software of the intelligent terminal so as to perform analysis; according to the current usage information of the user, the software formulates a corresponding cosmetic scheme and feeds back the same to a display screen of the intelligent terminal of the user; according to the cosmetic scheme on the display screen of the intelligent terminal, the user performs a corresponding operation. The above method eliminates the need for configuring a setting on the instrument when the cosmetic instrument is used and completes personal settings directly by the app software. The settings facilitate switching functions of the cosmetic instrument and provide accurate setting parameters, thus accomplishing a customized cosmetic model.

US 2017/099981 A1 discloses a hot and cold dispensing machine. The machine includes creating a family of smart coffee dispensing machine that is connected 24/7 to the cloud. The machines are controllable also by mobile app that use QR code via built in cam or an external reader and/or NFC technology to transfer data and establish communication and execute payments. The android based computer will be used to run the machine as well as to offer all the facilities of a computer or a fully functional tablet like but not limited to: executing commands and dispensing recipes, creating, deleting and editing profiles, change the system settings, connection to the internet, access to social media networks, playing publicity, registering audio/video messages, reading boarding pass codes used in airlines companies for identifying the user and communicating with Smart App via QR Code and/or NFC.

It is the **object** of the present invention to at least partially overcome the problems associated with the prior art. It is a particular object of the present invention to improve user experience while blending consumer goods and to achieve an improved final blend of the consumer goods.

The object is achieved according to the features of the independent claims. Advantageous embodiments can be found, e.g., in the dependent claims and/or in the description.

The object is achieved by a method for providing blended consumer goods to a user by using a blending device that is adapted to store at least two starting goods blendable into a blended consumer good, comprising: recording selection data concerning selections of the blended consumer goods by the user; recording response data provided by the user concerning responses to the selected blended consumer goods; and processing the data to prioritize presentation of blended consumer goods on a user interface for selection by the user.

This method gives the advantage that a blending process can learn from user choices as well as from user responses about a user's preferences. For example, that a certain blended consumer good (or simply a "blend") is chosen often to be made by the blending device may be indicative of a high rating by the user. Further, if a user actively gives a good grade to a certain blend - e.g. via a respective rating app - this may also be indicative of a high rating.

This in turn enables an improved presentation / advice of blended consumer goods for selection by the user (including an improved choice of ingredients / ingredient mixes and/or an improved choice of the final blend). Therefore, particularly meaningful advice can be given to a user via the user interface, even advice that is difficult to predict beforehand. It may even be possible to propose blends for a certain user that have never been created or tested before.

Advantageously, the method also allows tracking and monitoring shifting trends in a user's behaviour and preferences at different levels of granularity.

The method further allows determining which are the most used ingredients, blends, recipes etc. used by one or more users and allows - based on this information - to find explanatory patterns.

In particular, the method utilizes a blending device that is adapted to store at least two starting goods blendable into a blended consumer good. A user may select - via the user interface - some or all available starting goods and optionally their amount. The blending device is adapted to automatically blend and then dispense a respective blend blended or mixed from the selected starting goods to a user. To this effect, the blending device may comprise a blending chamber and a mixing device. In case that the consumer goods have a high miscibility, they can directly dispensed into / on a final receptacle to be used by the user (e.g. a bottle, a bag, a glass, a dish, a flacon etc.), without need of a blending chamber.

In particular, blended consumer goods are consumer goods that are blended or mixed from two or more starting goods.

The starting goods may be single ingredients (e.g., certain single fragrances like bergamot, citrus etc., foods like certain grains or nuts etc., or beverages like sparkling water, syrup etc.) and/or mixes of ingredients (e.g., multiple fragrances, food mixes, or beverage mixes). Each starting good may be stored in a respective container of the blending device. A container may be a replaceable container, in particular a refillable and/or recyclable container. To this effect, the blending device may have several seats for containers. Multiple containers may by placed into a cartridge.

In particular, each container may be labelled with information regarding or concerning information (information data) of the starting good contained in the container. To this effect, each container may comprise an RFID tag, an NFC tag, a barcode etc. The blending device may comprise a data reader like an RFID reader, an NFC reader, a barcode reader, etc., to read the information from the container.

In an embodiment, the blending device is equipped with or connected to a data communication interface to send read data and eventually data concerning a user selection / a blended consumer good and/or blending data (see below) to an external instance, in particular a data processing device.

The selection data may comprise any data concerning selections of the blended consumer goods, including any data concerning the starting goods and/or the final blend. The selection data may also comprise data concerning an identity and/or a profile of a user choosing a certain blend ("personal background data").

The response data may comprises data concerning a rating / assessment / evaluation / feedback of the blended consumer good by at least one user. These data are consciously given by the at least one user and are thus of particularly high relevance and prediction usefulness.

The data processing is used to prioritize or optimize presentation of blended consumer goods on a user interface for selection by the user. The presentation is thus based on learning user preferences and presenting such information that is more likely than not to appeal to the user. Prioritisation may, e.g., include making or presenting smart proposals based on the processed data, e.g. including blends or precipices having a high probability to be liked by the user and / or tips to combine certain ingredients and /or ingredient mixes resulting in final blends with a high probability to be liked by the user. Alternatively or additionally, prioritisation may include adapting the user interface (e.g., its entries) by using descriptors for describing blends of ingredients and resulting blends most useful or meaningful for the user.

The method may be performed individually for certain users. The method may additionally use cross-user information, i.e., additionally process data from other users to prioritize presentation of blended consumer goods on a user interface for selection by the user.

The user interface may be a man-machine interface (MMI) integrated into the blending device. Alternatively or additionally, the user interface may be a user's computing device, e.g. a non-mobile computing device such as a desktop computer, or a mobile computing device such as a laptop computer, a tablet, a smartphone, a phablet etc. The computing device may be communicatively connectable to the blending device and/or to the external instance. Thus, in general, the blending device may be operated in a stand-alone mode via an integrated man-machine interface and / or remotely via the computing device.

A computer program product may be stored on the computing device to at least partially perform the method, e.g., to act as the user interface. The computer program product may be an application program ("app") stored and executable on the computing device.

The blended consumer goods may be dispensable into bottles, glasses, flacons, bags etc. or any other suitable transport means to be retrieved by a user.

It is an embodiment that the blended consumer goods are blended from the same types of consumer goods, including fragrances, food or beverages. In other words, the starting consumer goods are fragrance ingredients, food ingredients or beverage ingredients, or parts thereof, and the blended consumer good may be a certain scent (perfume, cologne etc.) comprising multiple selected fragrances (e.g. of different levels of a scent pyramid), food comprising multiple food ingredients (e.g. muesli comprising selected flakes, nuts, fruit etc.) or a beverage (e.g. lemonade comprising sparkling water and one or more selected syrups of different taste). Also, the amount or dilution of the starting goods and thus of the ingredients of these starting goods may be specifically selected. In other words, blended consumer goods may in particular be fragrances, food or beverages.

It is an embodiment that the selection data comprise data concerning at least three out of a group comprising: ingredients of a selected blended consumer good; pre-mixed ingredient mixes of a selected blended consumer good; blending data used for blending the selected blended consumer good; personal background data attached to or associated with the selected blended consumer good (in particular, personal background data of the user selecting the blend or of other users responding to, e.g. rating, the blend).

The ingredient data may, for example, comprise information concerning ingredients of single ingredient containers or ingredient mix containers, e.g. comprising: ingredient's ID code(s) (CAS number etc.), concentration limit(s), a qualitative descriptor, non-affinity with other ingredients etc.

The data concerning ingredient mixes may, for example, comprise qualitative and/or technical descriptors of the mixes of ingredients inside the containers.

Ingredient data and data concerning ingredient mixes may comprise batch numbers, serial numbers, and/or qualitative and/or technical descriptors of the ingredients or mixes of ingredients inside certain containers.

The blending data may comprise data concerning amounts and/or percentages of the ingredients and/or ingredient mixes used to blend the blended consumer good(s). The blending data may comprise information which containers have been used together, how many millilitres or grams have been used from each container for producing a certain blended consumer good, features of the final blend produced, amount produced of each final blend, etc. ("blend data"). The blend data may thus comprise data describing the blend insofar as this blend may be reproduced. Such data may also be called "recipes".

The blending data may also comprise data associated with a certain user that creates the bend / blended consumer good, like log-in and log-off times and this user's profile, IP number, IMEI number, MAC number, etc. ("personal background data"). The user's profile may comprise a user's social profile and / or consumer profile. Entries for the user's profile(s) may be introduced into systems database via direct questions made through an app / questionnaire, in particular through the same app that controls the blending device, and /or in a physical store. Entries for the social profile may include: date of birth, gender, marital status, income level (in % above the minimum national salary), race, etc. These entries for the social profile may be complemented with data about the country and city of origin and/or the location of the user. Entries for the consumer profile may be retrieved via specific tests. In case of fragrances, there is a strong correlation between preferred colours, pictures, decorative styles at home, tastes, and the preference about specific olfactory families such as woody, fresh, citrus, flowery, aromatic etc. In the same way, regarding beverages or food, specific questions will be made about preferences, tastes, flavours, etc. The questions retrieved by these specific consumer profiling tests may be used to classify each user into one profile type, e.g. among a minimum of three profile types. When the number of users increases, further and more detailed classification into profiles may be made by the system.

The database of the co-ordination entity may be preloaded with a limited / small number of recipes, wherein each one of the recipes is primarily assigned to one of the existing consumer profiles. However, the assignment may be gradually distributed into existing or new profiles according to the analysis of data generated and stored in the database / system. One possible method through which the database evolves may be as follows:

In its initial state, there may be n (with n = 2, 3, 4, ...) customer profiles preloaded into the database. Each recipe is assigned to them with a value ("fitting value") of maximum fit (e.g., "1" or 100 %).

A new user of the blending device needs to complete a customer profiling test and gives information regarding his/her social profile. The customer profiling test will classify the new user into one of the n customer profiles. The user's social profile / information will also be stored also in database.

The co-ordination entity will, e.g. via the mobile device, first offer to the user a recipe associated in a 100 % value in his/her customer profile. Alternatively, the user may decide to create a new recipe that does not yet exist in the database, selecting ingredients and blending ratios of the new recipe.

The selection data and the response data may be recorded each time a blended consumer good is produced. Additionally or alternatively, the selection data and the response data may be recorded each time a change of the data occurs.

The response data may comprise "likes" or "not likes" for resulting blends produced or to be produced the user, ratings of resulting blends produced or to be produced etc. The response data may be given by the user and eventually by other persons (e.g. other persons trying out the same blended consumer good). Additionally, the data about "likes" and "not likes" may be indirectly retrieved from blending devices where the feature "test blend" is enabled. When this feature is enabled, the user has the possibility to produce a small sample of blended consumer goods, i.e. the test blend. In case the user does not like the sample, he/she will not produce an additional amount. In such a case, the recipe will be categorized into "not liked" by the specific user. Otherwise the user will produce an additional amount of the blend, which action will be automatically categorized to mean a "like" by the specific user.

In case that the user wants to test an existing recipe from his customer profile, the way to process the information may be described as follows: If a recipe initially assigned to a certain customer profile i, is not liked by a user from this customer profile, the fitting value of the recipe with respect to this customer profile will be decreased. When recipes have a relevant number of users from the same customer profile with different preference for the same recipe, data from the social profile will be used to find explanatory patterns, such as influence of rage, age, location, or past customer behaviour. If a reasonably high correlation is found, a new customer profile may be created, in this case with attributes related to the former customer profile, and refined with social attributes.

When a user decides to create a new recipe not yet existing in the database, the recipe will be added to the customer profile of the user with a positive or negative value, depending on the user's reaction to the new recipe.

It is an embodiment that the data concerning the ingredients, the pre-mixed ingredient mixes and / or the blending data are received from at least one blending device adapted to dispense the blended consumer goods based on selections of ingredients and / or pre-mixed ingredient mixes made by the user. In particular, a blending device may automatically sent these data to a processing device or instance processing the data. This instance may be an instance different or external to the blending device. Alternatively or additionally, the instance may be the blending device itself. The data may be stored by this instance, e.g. by providing a respective database. In particular, the instance is adapted to perform the method may receive the data and automatically processing these data to prioritize presentation of blended consumer goods on a user interface for selection by the user.

It is an embodiment that the selection data are processed into predictor variables for statistical analysis and the response data are processed into predicted variables for statistical analysis. This enables an optimization of the presentation of blended consumer goods on a user interface for selection by the user. This also facilitates use of a statistical learning algorithm to improve prioritization.

The processing into predictor variables and predicted variables may comprises coding of stored data into numbers according to a predetermined coding scheme or coding algorithm. This also facilitates use of a statistical learning algorithm to prioritize presentation of blended consumer goods on a user interface for selection by the user.

In particular, the method may perform or execute following algorithms intended for predictor variables:

- Conversion of data / features describing the ingredients of containers into numerical features / predictor variables ready for statistical analysis. For example, each starting good and/or ingredient may be defined by three numbers, one number $X_{i.1}$ referring to its ID number (id.1,..., id.n), another number $X_{i.2}$ referring to attributes such as belonging to a family of ingredients (f.1, ..., f.n), and yet another number $X_{i.3}$ referring to the starting goods' / ingredients' level of intensity (int.1, ..., int.n). Thus, the features of the starting good / ingredient i are defined by three numbers (Xi.1, X1.2; Xi.3).

- Conversion of data / features describing a mix of ingredients in containers into numerical features / predictor variables ready for statistical analysis; For example, each container will be defined by a vector (X1, ...., Xi, ..., Xn), where i equals the ID number of the ingredient, n equals the total number of ingredients in the system / stored in the database, and the value X equals the concentration of every ingredient in the container, e.g. expressed in % with X1 + ... + Xi + ... + Xn = 100.

- Conversion of data / features describing the resulting blend into numerical features ready for statistical analysis. For example, each resulting blend will be defined by a vector (x1, ..., Xi, ..., Xn), where i equals the ID number of the ingredients, n equals the total number of ingredients in the system/ stored in the database, and the value X equals the concentration of every ingredient of the resulting blend, expressed in % with X1 +...+ Xi +...+ Xn = 100.

- Conversion of data / features describing a user's social profile into numerical features ready for statistical analysis. For example, each profile may be described with features such as: gender (0 = male; 1 = female); range of age (0 = 0 < 15 years old; 1 = 15 - 20; 2 = 21 - 30; 3 = 31 - 40; 4 = 41 - 50; 5 = 51 - 60; 6 = >60 years); race (0 = Caucasian, 1 = black, 2 = Indian, 3 = Asian); three digits country code according to ISO 3166-1; etc. Therefore a social profile feature may be defined as a vector (X1 [0-1]; X2 [0-6] : X3 [0-3]; X4 [cc] etc.).

Also, the method may perform or execute following algorithm intended for predicted variables:

- Conversion of data / features describing the response from at least one user about the resulting final blend, e.g. delivered by the blending device, to numerical features / or predicted dependent variables ready for statistical analysis. For example, Y = 0 may mean that a user does not like the resulting blend, Y=1 may mean that a user likes the resulting blend.

In particular, the above conversion algorithms allow coding of data input so that matrixes and vectors can be created for statistical supervised and unsupervised learning. Such statistical supervised and unsupervised learning is generally known in the art and is not explained further herein.

Examples of supervised learning comprise linear methods such as thin plate spline or generalize additive models (GAM), or non-lineal methods such as support vector machines with non-lineal kernels. Supervised learning methods are particularly useful to train co-ordinating entity and a system comprising the co-ordinating entity, respectively, about predicting when a user will like a new blend, or not.

Examples of unsupervised learning methods include K-means clustering or hierarchical clustering, which is particularly useful to find patterns and correlations between social profiles and liked or disliked recipes, and also to refine customer profiles by creating additional ones.

It is an embodiment that the selection data are grouped into matrices and the response data are grouped into vectors. This further facilitates use of a statistical learning algorithm to prioritize presentation of blended consumer goods on a user interface for selection by the user.

In particular, the predictor variables (predictors) may be therefore coded in the form of matrix components $x_{ij}$ and may represent the j-th value for the i-th observation corresponding to each predictor variable. The index i may have the values $l = \{1, 2, ..., n\}$ and the index j may have the values $j = \{1, 2, ..., p\}$. The index i may be used to index the samples or observations (from 1 to n) and the index j may be used to index the variable values of each predictor (from 1 to p). The matrix components $x_{ij}$ may be grouped into a (n x p)-matrix X according to:

$$X = \begin{pmatrix} x_{11} & \cdots & x_{1p} \\ \vdots & \ddots & \vdots \\ x_{n1} & \cdots & x_{np} \end{pmatrix}$$

Response data obtained concerning or containing a user's feedback may be coded in the form of vector components $y_i$ to denote the i-th observation of the variable on which one wishes to make predictions. According to the examples explained above, to find a correlation between users and liked / not liked recipes, the variable to be predicted may have a value of 0 (not liked) or 1 (liked), and there will be i observations, namely one per every recipe a user has tested with the blending device. The vector components $y_i$ may, e.g., grouped in the following form:

$$\vec{y} = \begin{pmatrix} y_1 \\ \vdots \\ y_n \end{pmatrix}$$

In particular after having all selection data and response data coded into numbers in the form of matrixes and or vectors, the data may be cleaned, classified, integrated and aggregated for data analyses, interpretation and machine learning purposes.

Different matrices for different features may be created using tools of statistical analysis in order to train the co-ordinating entity / the system with data and to test how predicted observations using the predictors (features) fit to real observations.

It is an embodiment that a statistical learning algorithm is performed based on the predictor variables and / or the predicted variables; and the presentation of blended consumer goods on the user interface is changed based on an outcome of the statistical learning algorithm. This gives the advantage that user preferences can be tracked and adapted if necessary based on particularly reliable response data.

In particular, algorithms for statistical supervised and unsupervised learning may be used to make predictions on users' responses (predicted variables), inferences on patterns and relationships between predictor variables or combinations of both to provide results e.g. in one or more of the following areas:

Business intelligence:

- Inference of new combinations of ingredients with a high probability to be liked by users;
- Dynamic clustering of users by social features and preferences; and / or
- Sales, ratings and usage of combination of ingredients, recipes and resulting blends.

For example, standard statistical analysis may find a correlation / higher probability that users with masculine certain gender from a certain race particularly like blends (purchases) with containers or ingredients having specific features. This will help business in better arranging supply chains for countries, areas or cities with higher percentage of customers with specific features.

Smart proposals:

- Recipes and resulting blends having a high probability to be liked by the user may be presented to the user via the user interface;
- Guidance or tips to combine certain ingredients, resulting in final blends with a high probability to be liked by the user.

For example, when users with specific features of their social profile are found to be statistically meaningful regarding similar preferences about resulting blends, they can be clustered into a new customer profile. As they have the tendency to like recipes containing certain ingredients or within a similar concentrations in the resulting blends, recipes tested by users from the same cluster / customer profile can be recommended or not to other users form the same cluster/ customer profile with higher probability of being the right proposal.

Adaptive user interface:

- The user interface may learn from user feedback and may adopt descriptors to be used on the user interface for describing blends of ingredients and resulting blends most useful or meaningful for the user.
- Statistical analysis can be also used to adapt the user interface and the language it uses to describe recipes and ingredients. For example, after a user has "liked" or "not liked" a new recipe, the co-ordination entity or the system asks for input regarding how the user describes the resulting blend and what they like/dislike about it. To this effect, descriptors meaningful for the user may be displayed for future interactions. The co-ordination entity / system may assign the new descriptors for similar blends / starting goods and/or ingredients.

It is an embodiment that the selection data and / or response data of other users are processed to prioritize presentation of blended consumer goods on a user interface for selection by the user. This gives the advantage that responses and preferences of other users can be incorporated into the presentation, thus improving the probability of a selection of blended consumer goods liked by the user. This may especially apply when similar offers are made to users belonging to the same customer profile.

Generally, the method described above may be performed by considering only one user, i.e., the user to which the presentation of blended consumer goods on the user interface for selection by this user. Consequently, only selection data and response data from this user are considered. Alternatively or additionally, the method described above may be performed by additionally considering selection data and / or response data from at least one other user than the user to which the presentation of blended consumer goods on the user interface for selection by this user is made. For example, ratings of other users regarding a certain blend made by the one user may be considered as response data.

In a variant, the user may be equated with a certain blending device. Thus, the selection data gathered from this blending device and the response data associated with this blending device are used to present blended consumer goods on the user interface for selection by any user connected with this blending device. This is particularly effective and easy to implement for the case that the blending device is only used by one user.

In another variant, a user may be distinctively identifiable, e.g. associated with a unique ID, fingerprint or profile. This is particularly effective and easy to implement for the case that the blending device is available to more than one user. Thus, at least the selection data gathered from this blending device and the response data connected with this blending device and associated with this user are used to present blended consumer goods on the user interface for selection by this user. Regarding implementation, to dispense a blended consumer good, the user may first give its identification to the blending device, e.g. by selecting its profile in a menu of the user interface, typing in its ID, giving a fingerprint, inserting a user card etc. This variant advantageously considers use of several blending devices by a certain distinctively identifiable user. This, in turn, improves presentation even further.

In both cases, all data concerning performing a particular blending process may be linked with or attached to the user's identification (in the first case meaning a certain blending device) such that the data can be associated with the user's identification. In both cases, the user's identification may be part of the personal background data.

In particular, the above described invention may achieve one or more of the following advantages:

- The blending device may learn from at least one user and may guide and / or advice the user on resulting blends and/or combinable containers with blends of ingredients matching the user's preferences;
- The user interface may give particularly meaningful advice to a user, even advice difficult to predict beforehand;
- The system may know how to propose suitable recipes and resulting blends for each user, never created or tested before by the companies commercializing respective ingredient mixes / containers;
- May achieve learning from other users and applying learned results to specific users;
- May assist the industry in the design of new compositions of ingredients to be blended into containers etc., and / or on designing resulting blends;
- May identify similarities between compositions of blended ingredients created by different users (designers of blends), based on descriptors used by designers of recipes;
- May propose new compositions of blended ingredients;
- May track and monitor shifting trends in one or more user's behaviour and preferences at different levels of granularity;
- May analyse which are the most used ingredients, blend of ingredients, recipes and might derive why or find explanatory patterns;
- May understand why user profiles evolve according to a respective social profile, regions, etc.
- May analyse vectors of change in preferences, due to economic, social, politic or population changes;
- May anticipate changes, trends in fragrances, food or beverages etc.;
- May be a "supra-designer of recipes" learning from blends of ingredients created by many different users / designers.

The object is also achieved using a data processing device comprising a data processing unit and a data storage for storing the recorded selection data, the recorded response data and/or the processed data, wherein the data processing device is adapted to perform the method according to any of the preceding claims.

The data processing device may be the blending device. In other words, the function of the data processing device may be integrated into the blending device. Then, the blending device may be adapted to perform the method on its own.

Alternatively or additionally, the data processing device is a device different from or external of a blending device. The external device may be a remote server which is or may be communicatively coupled to at least one blending device, preferably several blending devices. The external device may be the user's computing device.

The data processing device - in particular if at least partially realized as an external device - may be a distributed system, e.g. comprising a "cloud computer" or a combination of the user's computing device and a remote server.

The data processing device may comprise a computer program product that comprises code that - if executed - enables performing at least part of the method as described above. The computer program product may be an application program ("app").

The object is also achieved by a system, comprising the data processing device as described above and at least one blending device adapted to dispense the blended consumer goods based on selections of ingredients and / or pre-mixed ingredient mixes made by at least one user, wherein the data processing device and the at least one blending device are communicatively coupled (directly or via a data network) such that the data concerning the ingredients, the pre-mixed ingredient mixes and / or the blending data are receivable by the data processing device from the at least one blending device; and wherein the data processing device is communicatively coupled to a network to receive the response data. The system can be embodied in analogy to the above method and/or to the data processing device and achieves the same advantages.

It is an embodiment that the data processing device is adapted to transfer personalized information regarding presentation of blended consumer goods to the user interface regarding a respective user. In particular, this personalized information corresponds to information enabling prioritizing presentation of blended consumer goods on the user interface for selection by the user.

This embodiment may be realized by the data processing device sending the personalized information / data to the user interface and the device providing the user interface, respectively, where the personalized information is stored. The next time a user associated with the personalized information logs in a blending device, he or she is presented with a layout of the user interface that has been prioritized to mirror the results of the statistical data analysis in order to improve a following user selection of a blended consumer good. Additionally or alternatively, the personalized information / data is sent from the data processing device to the user interface (and the device providing the user interface, respectively) upon request of the user interface when a user associated with the personalized information logs in.

The object is also achieved by a computer program product that comprises code that - if executed - enables performing the method as described above.

The invention has been described with regard to various claim categories (method, data processing device, system, computer program product etc.). If not explicitly stated otherwise, the features and advantages of one claim category are similarly applicable to all other claim categories.

The above described features and advantages of the invention as well as their kind of implementation will now be schematically described in more detail by at least one embodiment in the context of one or more figures.

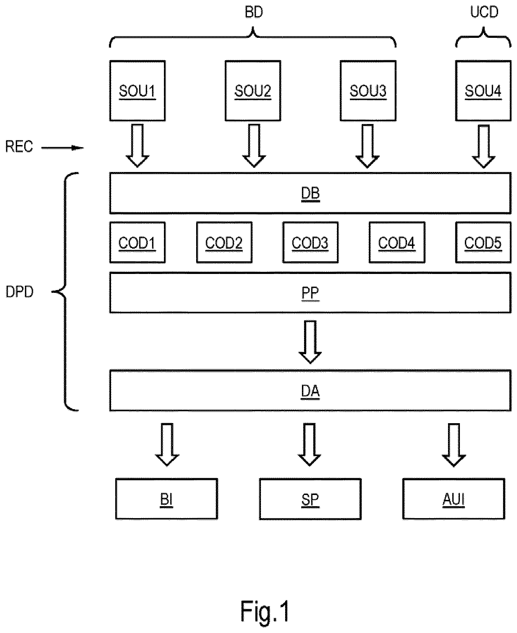

**Fig.1** shows a schematic diagram depicting the method and associated devices.

The method makes use of several sources of information SOU1 to SOU4 to record REC selection data and response data associated with a blending process to produce a blend from at least two starting consumer goods. These sources SOU1 to SOU4 may include:

At least one first source of information SOU1 may provide ingredient data concerning ingredients selectable or selected to be introduced into the blend by a blending device BD. The at least one first source of information SOU1 may provide an ingredients' ID code (e.g. its CAS number), lower and/or upper known concentration limits fixed for legal or technical reasons, function(s), qualitative descriptor(s), known non-affinity with other ingredients etc. as the ingredient data or "features".

At least one second source of information SOU2 may provide data concerning containers to be used together with the blending device BD. Regarding the containers, the following data / features may be recorded: batch number, serial number, qualitative or technical descriptors of pre-mixed mixes of ingredients inside the containers, other data concerning ingredient mixes etc. The second source of information SOU2 may also provide ingredient data. Thus, the first source of information SOU1 and the second source of information SOU2 may be the same source, e.g. containers being labelled accordingly.

At least one third source of information SOU3 may provide data concerning at least one blending device BD, including a blending process. In this regard, the third source of information SOU3 may provide respective blending data. In particular, the third source of information SOU3 may comprise information / data about: containers used together, amounts (e.g. in ml, grams or as a percentage) used from each container to produce a blend, log-in and log-off times and profile, an IP address of the router through which the mobile device and/or machine is connected to the system (in particular a system that comprises the co-ordination entity), features of the final blend produced, amount produced of the final blend, etc. The third source of information SOU3 may be the blending device BD.

At least one fourth source of information SOU4 may provide data associated with at least one user, e.g. personal background data lake a user's social profile and/or consumer profile or response data like "likes" or "don't likes" of resulting blends produced or to be produced, ratings of resulting blends produced or to be produced etc. The at least one fourth source of information SOU4 may comprise the user interface and / or social networks. Thus, the fourth source of information SOU4 may provide background data associated with a certain user and/or response data associated with at least this user.

The blends produced by this method may in particular be fragrances, food, or beverages.

The recorded data may be stored in a database DB. The database DB may be part of a data processing device DPD like the blending device BD, a user's computing device UCD, a remote server, and/or the cloud etc.

In one variant, the first to third sources of information SOU1, SOU2, SOU3 are the part of at least one blending device BD, e.g. the blending device BD and its containers. To this effect, the blending device BD may read the data associated with the first to third sources of information SOU1, SOU2, SOU3 and transfer these data to the database DB. For example, the blending device BD may transfer relevant data from the first to third sources of information SOU1, SOU2, SOU3 to the database DB after having finished a blending process. Alternatively, the data processing device DPD may poll or prompt the blending device BD to transfer the data, e.g. after expiry of a certain time interval.

The fourth source of information SOU4 may comprise the user interface of the bending device BD (i.e., the blending device BD itself), the user's computing device UCD - in particular if also providing the user interface - and / or social networks, in particular independent of dedicated computing devices. Thus, in a variant, the blending device BD may also transfer data of the fourth source of information SOU4 to the database DB after having finished a blending process, e.g. transfer a user's background data like a user's ID. In particular, the blending device BD is also the fourth source of information SOU4.

The data stored in the database DB may be coded according to pre-defined coding schemes. In particular, the method may perform or execute coding schemes or algorithms COD1 to COD5 according to the type or group of data stored in the database DB. For example, ingredient data may be coded (converted) into numerical values by a coding algorithm COD1. Data describing containers and mix of ingredients in common containers, respectively, may be coded into numerical values by a coding algorithm COD2. Blending data may be coded into numerical values by a coding algorithm COD3. Personal background data may be coded into numerical values by a coding algorithm COD4. Response data may be coded into numerical values by a coding algorithm COD5. The coding may be performed by the data processing device DPD.

The coded data may be grouped into predictor variables and predicted variables. In particular, the selection data (ingredient data, data describing containers and pre-mixed ingredient mixes in common containers, respectively, blending data and personal background data) are processed into predictor variables while the response data are processed into predicted variables. The selection data may be arranged in one or more matrices while the response data may be arranged in one or more vectors. The arranging may be performed by the data processing device DPD.

The coded data may be pre-processed in a pre-processing step PP performing, e.g. cleansing, integrating, and/or aggregating etc. the data. The pre-processing may be performed by the data processing device DPD.

Then, a statistical data analysis DA may be performed. The statistical data analysis DA may include processing the pre-processed data to perform a statistical learning algorithm based on the predictor variables and the predicted variables in order to improve / prioritize the presentation of blended consumer goods on the user interface based on an outcome of the statistical learning algorithm. The statistical data analysis DA may be performed by the data processing device DPD.

The statistical data analysis DA may comprise statistical supervised and unsupervised learning to make predictions, e.g., on users' responses (corresponding to predicted variables), inference on patterns and relationships between predictor variables) or combinations of both to provide results, e.g. in the following three areas:

Business intelligence, BI:

- Inference of new combinations of ingredients with a high probability to be liked by users;
- Dynamic clustering of users by social features and preferences; and / or
- Sales, ratings and usage of combination of ingredients, recipes and resulting blends.

Smart proposals, SP:

- Recipes and resulting blends having a high probability to be liked by the user may be presented to the user via the user interface;
- Guidance or tips to combine certain ingredients, resulting in final blends with a high probability to be liked by the user.

Adaptive user interface, AUI:

- The user interface may learn from user feedback and may adopt descriptors to be used on the user interface for describing blends of ingredients and resulting blends most useful or meaningful for the user.

All three areas, but in particular the smart proposals and the adaptive user interface areas, can be used to improve / prioritize the presentation of blended consumer goods on the user interface.

Of course, the invention is not restricted to the described embodiments.

**LIST OF REFERENCE SIGNS**

AUI     Adaptive user interface
BI      Business intelligence
BD      Blending device
COD1    Coding algorithm
COD2    Coding algorithm
COD3    Coding algorithm
COD4    Coding algorithm
COD5    Coding algorithm
DA      Statistical data analysis
DB      Database
DPD     Data processing device
PP      Pre-processing step
REC     Recording step
SOU1    First source of information
SOU2    Second source of information
SOU3    Third source of information
SOU4    Fourth source of information
SP      Smart proposals
UCD     User's computing device

**Claims**

1. A method for providing blended consumer goods to a user by using a blending device (BD) that is adapted to store at least two starting goods blendable into a blended consumer good, comprising:

   - recording (REC) selection data concerning selections of the blended consumer goods by the user;
   - recording (REC) response data provided by the user concerning responses to the selected blended consumer goods; and
   - processing (COD1 - COD5, PP, DA) the data to prioritize presentation (SP, AUI) of blended consumer goods on a user interface (BD, UCD) for selection by the user.

2. The method according to claim 1, wherein the blended consumer goods are blended from the same types of consumer goods, including fragrances, food or beverages.

3. The method according to any of the preceding claims, wherein the selection data comprise data concerning at least three out of the group comprising

- ingredients of the selected blended consumer goods;
- pre-mixed ingredient mixes of the selected blended consumer goods;
- blending data used for blending the selected blended consumer goods;
- personal background data attached to the selected blended consumer goods.

4. The method according to claim 3, wherein the data concerning the ingredients, the pre-mixed ingredient mixes and / or the blending data are received from at least one blending device (BD) adapted to dispense the blended consumer goods based on selections of ingredients and / or pre-mixed ingredient mixes made by the user.

5. The method according to any of the preceding claims, wherein

- the selection data are processed into predictor variables for statistical analysis (DA); and
- the response data are processed into predicted variables for (DA) statistical analysis.

6. The method according to claim 5, wherein the selection data are grouped into matrices and the response data are grouped into vectors.

7. The method according to any of the claims 5 to 6, wherein the statistical analysis (DA) s performed as a statistical learning algorithm based on the predictor variables and / or the predicted variables; and the presentation of blended consumer goods on the user interface (BD, UCD) is changed based on an outcome of the statistical learning algorithm.

8. The method according to any of the preceding claims, wherein selection data and / or response data of other users are processed to prioritize presentation of blended consumer goods on a user interface (BD, UCD) for selection by the user.

9. A data processing device (DPD, BD, UCD) comprising a data processing unit and a data storage (DB) for storing the selection data, the response data and/or the processed data, wherein the data processing device (DPD, BD, UCD) is adapted to perform the method according to any of the preceding claims.

10. A system (DPD, BD, UCD), comprising

- the data processing device (DBD, BD, UCD) according to claim 9, especially adapted to perform the method according to claim 4, and
- at least one blending device (BD) adapted to dispense the blended consumer goods based on selections of ingredients and / or pre-mixed ingredient mixes made by the user,

wherein

- the data processing device (DPD, BD, UCD) and the at least one blending device (BD) are communicatively coupled such that the data concerning the ingredients, the pre-mixed ingredient mixes and / or the blending data are receivable from the at least one blending device;
- the data processing device (DPD, BD, UCD) is communicatively coupled to a network to receive the response data.

11. The system (DPD, BD, UCD) according to claim 10, wherein the data processing device is adapted to transfer personalized information regarding presentation of blended consumer goods to the user interface (BD, UCD) of a respective user.

Fig.1

EP 3 483 827 A1

Europäisches
Patentamt
European
Patent Office
Office européen
des brevets

# EUROPEAN SEARCH REPORT

**Application Number**

EP 17 38 2753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/029294 A1 (TBOT INC [CA]) 3 March 2016 (2016-03-03) * paragraphs [0018], [0128], [0132], [0137], [0220], [0239], [0267], [0332], [0346]; figure 52 * ----- | 1-11 | INV. G06Q30/06 G06Q20/18 G06Q20/32 G07F9/02 G07F13/06 |

TECHNICAL FIELDS
SEARCHED (IPC)

G06Q
G07F

The present search report has been drawn up for all claims

| Place of search | Date of completion of the search | Examiner |
|---|---|---|
| The Hague | 14 February 2018 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**EP 3 483 827 A1**

## ANNEX TO THE EUROPEAN SEARCH REPORT
## ON EUROPEAN PATENT APPLICATION NO.

EP 17 38 2753

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2018

| Patent document cited in search report | Publication date | Patent family member(s) | Publication date |
|---|---|---|---|
| WO 2016029294 A1 | 03-03-2016 | AU 2015309631 A1 | 13-04-2017 |
| | | CA 2959445 A1 | 03-03-2016 |
| | | CN 107072432 A | 18-08-2017 |
| | | EP 3185731 A1 | 05-07-2017 |
| | | JP 2017533867 A | 16-11-2017 |
| | | US 2017238753 A1 | 24-08-2017 |
| | | WO 2016029294 A1 | 03-03-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6759072 B
- US 8442674 B
- US 9499385 B
- US 9155330 B
- WO 2016107163 A1
- US 2017099981 A1